Europäisches Patentamt

European Patent Office

Office européen des brevets

(19)

(11) Publication number: **0 007 755**
**B1**

(12) **EUROPEAN PATENT SPECIFICATION**

(45) Date of publication of patent specification: **28.09.83**

(21) Application number: **79301391.3**

(22) Date of filing: **13.07.79**

(51) Int. Cl.³: **H 01 F 10/16,**
**H 01 F 41/20,**
**H 01 F 41/18, C 04 B 35/26**

(54) Method for producing a magnetic recording medium and magnetic recording medium so produced.

(30) Priority: **21.07.78 US 927068**

(43) Date of publication of application:
**06.02.80 Bulletin 80/3**

(45) Publication of the grant of the patent:
**28.09.83 Bulletin 83/39**

(84) Designated Contracting States:
**DE FR GB NL**

(56) References cited:
**FR - A - 2 297 256**

**GEOPHYSIK UND TECHNIK, 6. Auflage, Band II, Teil 9, 1962, pages 1—61. K. H. Hellwege, Berlin**
**TEBLE-GRAIK "Magnetic Materials"; page 116**

(73) Proprietor: **XEROX CORPORATION**
**Xerox Square - 020**
**Rochester New York 14644 (US)**

(72) Inventor: **Charlan, George Bruce**
**6210 Calle Bonita**
**San Jose, California 95120 (US)**
Inventor: **Chen, Tu**
**1324 Paramount Drive**
**Saratoga, California 95070 (US)**

(74) Representative: **Goode, Ian Roy et al,**
**European Patent Attorney c/o Rank Xerox Patent**
**Department 338 Euston Road**
**London NW1 3BH (GB)**

# Method for producing a magnetic recording medium and magnetic recording medium so produced

This invention relates to a magnetic recording medium comprising a thin film of magnetic alloy of cobalt on a non-magnetic support, and to a method of producing such a medium.

In magnetic recording the conventional recording media generally comprise $\gamma$-Fe$_2$O$_3$, Co-doped $\gamma$-Fe$_2$O$_3$, Fe$_3$O$_4$ or CrO$_2$ powdery ferromagnetic alloys dispersed into an organic binder to form a coating-layer on a suitable substrate. In this type of recording medium, because of the relatively low magnetization of the powdery ferromagnetic alloys and the existance of a non-magnetic organic binder, the recording medium layer should have a thickness on the order of a micrometer.

In the technology of magnetic recording, the improvements which are sought are primarily concerned with the increase in the recording bit density per given area. For open-flux memory elements employed in disk, drum or tape recording systems, the limit of the recording density will be determined by the ratio of the demagnetizing field to the coercive field of the film. Also the strength of the demagnetizing field is related to the saturation magnetization and the thickness of the medium. Furthermore, in order to attain an acceptable standard of maximum resolution and signal to noise ratio in the data extraction, it is necessary to obtain the smallest possible thickness of recording medium layer which is capable of providing a sufficient output signal. This compromise can be achieved with greater ease as the saturation induction and the squareness of the hysteresis B-H loop of the medium are made higher. In terms of all these constraints, it is the main objective to obtain a magnetic thin film medium having a high coercive field, a high squareness of hysteresis loop and of small layer thickness, preferably less than 100 nm thick, but possessing a high remanent magnetic moment.

The ferromagnetic metal thin films produced by electrochemical depositions, such as electroplating and electroless plating, and by vacuum deposition, such as ion plating, diode sputtering, ion beam sputtering, electro beam evaporation and thermal evaporation, have attracted special interest as to non-binder type magnetic recording media, ie, media that do not use a binder. This type of non-binder metallic magnetic thin film, in general, has a much higher saturation magnetic induction than the oxide media previously referred to, and therefore is fabricated ten times thinner in layer thickness as compared to binder type recording media and still provides a sufficient remanence for the output signal.

Although there is much progress in making magnetic disks of the metallic type thin film based on electroplating or electroless plating of ferromagnetic films such as Co-P and Ni-Co-P, the film properties such as coercivity, H$_c$, or squareness of the hysteresis loop, are strongly dependent on the structure of the disk substrate and the surface condition of the disk substrate. Therefore, it is rather difficult to obtain a magnetic disk with uniform and desired properties without elaborate preparation and careful handling of the substrate.

To overcome the disadvantage of the electroplating or electroless plating of the metallic magnetic thin film, the vacuum deposition process has been proposed. This process is performed under clean environments, and the deposited films are not strongly dependent on the surface and structure of the substrate. Examples of these proposals include alternate layers of Co-Cr in a multilayer structure formed by evaporation under a vacuum as disclosed in US Patent 3787327, and ion-plating of Co-Si, Co-Fe-Ni and Co-Si-Ni alloy thin film in a vacuum as disclosed in US Patent 4002546. The results shown and described in these patents are not optimum for high density recording or are too complicated and not practical for commercial manufacturing processes. For example, in the multilayer Co-Cr structure film disclosed in US Patent 3787237, even though the value of coercivity H$_c$, of the film can be made as high as 20,000 A.m$^{-1}$ or more, the value of H$_c$ is strongly thickness dependent, that is, it changes from approximately 16,000 A.m$^{-1}$ to approximately 48,000 A.m$^{-1}$ below layer thicknesses of 100 nm.

As mentioned earlier, the advantage of employing metallic magnetic film as the recording medium is the ability to use a small, thickness of the film because of the high magnetic induction associated with the metallic film. In practice, for high density recording, the most desirable range of film thickness in the metallic film is less than 100 nm. Therefore, the strong thickness dependence of the value of H$_c$ in the multilayer Co-Cr film in this thickness range would drastically increase the difficulty of making a film having a uniform coercivity over a large area.

Another disadvantage associated with this multilayer Co-Cr structure is the cost of producing the film in the manufacturing of large area disks due to the multiple sequences required for fabricating the multilayer structure.

For the ion plating of Co-Si, Co-Fe-Ni and Co-Si-Ni alloy thin films, as disclosed in US Patent 4002546, even though it was disclosed that it was possible to obtain magnetic films with a coercive field as high as 55,700 A.m$^{-1}$ for some of the Co-Si alloy the ratio of the remanence, Br, to the saturation induction, B$_s$, of the film is generally less than 0.8. Also the rectangularity of squareness ratio of the hysteresis loop defined based on the magnetic field spread between the transition of the opposite magnetization near the coercive field has not been specified. The rather low Br/Bs ratio and absence of specification of the squareness ratio based on field spread of the ion plated film places a strong limitation on the ability of this type of film for adaptability to high density recording.

The squareness ratio defined, based on this field spread near the coercive field, is an indication of the ability of the film to perform a high density recording. The squareness based on the field spread near the coercive force has been defined as S* by M L Williams, R L Comstock, AIP Conference Proceedings Magnetism and Magnetic Material, No 5, Sept, 1738 (1971) and as SQ in US Patent 3738818.

The present invention, as claimed, is intended to provide a remedy for the disadvantages outlined above, and provides a magnetic recording medium which is characterised in that the magnetic alloy comprises cobalt and any one or more of the elements rhenium, ruthenium and osmium, the alloy being in the hexagonal close-packed phase.

The invention also provides a method of producing such a magnetic recording medium which is characterised in that the magnetic alloy of cobalt is vacuum deposited on the support with the support maintained at a temperature between ambient temperature and 400°C.

The main advantage offered by this invention is that it provides a magnetic recording medium having high coercive field, high remanence and high loop squareness for high density recording. The thin films of magnetic material are magnetically isotropic and have the squareness ratios $B_r/B_s$ and S* between 0.8 and 1 while the value of the saturation induction of said films can be attained above 0.50 Wb.m$^{-2}$ and the value of their coercive field can attain between 16,000 and 64,000 A.m$^{-1}$.

The vacuum deposition method includes but is not limited to the following processes: D C or R F diode sputtering, ion beam sputtering, thermal evaporation and electron beam evaporation.

A magnetic recording material, and a method of producing such a material, in accordance with the invention will now be described, by way of example, with reference to the accompanying drawings, in which:—

Figure 1 shows a general hysteresis curve for magnetic recording media in support of the definition for residual induction, $B_r$, saturation induction $B_s$, coercive field, $H_c$, and squareness ratio ($B_r/B_s$ and S*).

Figure 2 illustrates the squareness ratio SQ of a hysteresis curve defined in US Patent 3738818.

Figures 3A, 3B and 3C show a binary phase diagram of Co-Re, Co-Ru, Co-Os and the preferred range of alloy composition to be used in the present invention.

Figure 4 is a diagram showing the influence of layer thickness of a Co-Re alloy thin film on the coercive field.

Figure 5 is a diagram showing the influence of layer thickness on the squareness ratio, $B_r/B_s$ and S*, for the Co-Re alloy thin film of Figure 4.

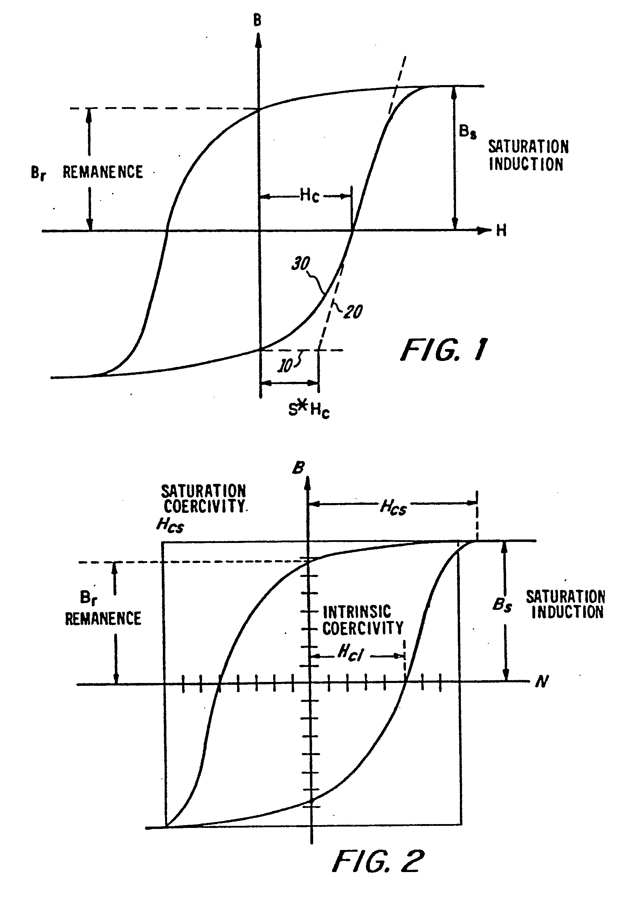

Figures 1 and 2 demonstrate accepted methods of calculating squareness ratio based on field spread near the coercive field, $H_c$ or based upon the value of remanence, $B_r$ and the saturation induction, $B_s$. In Figure 1, the Williams-Comstock method is shown. This is defined in terms of remanence or residual induction, $B_r$, and the slope of the major hysteresis curve at $H=H_c$ according to $S*H_c(dB/dH)-B_r$ divided by $H_c$ (dB/dH). An ideal square loop would have S* equal to 1. Thus, S* is equal to H defined by line 10 divided by $H_c$, these values defined by the slope 20 of the major hysteresis curve 30 of the B-H loop and the value of $B_r$.

Another accepted means for determining the squareness ratio is the value of remanence, $B_r$, over the value of saturation induction, $B_s$.

In Figure 2, the method of US Patent 3738818 to Eliot Stone and Pravin K Patel is shown. The squareness ratio, SQ, of the hysteresis loop is the value of intrinsic coercivity, $H_{ci}$ over the value of saturation coercivity, $H_{cs}$.

In any case, the squareness ratio is an indication of how good the magnetic film is as a recording medium in terms of recording density and signal to noise ratio upon signal readout. The higher these ratio values, the higher the recording density and signal to noise ratio.

For a magnetic material such as cobalt (Co) or its alloy to have high coercive field for high density magnetic recording, it is essential that the crystal structure of a film produced from such material or its alloy should have the high magnetocrystalline anisotropic hexagonal close-packed (HCP) phase of Co. Also the microstructure of the film such as grain size and crystallographic orientation of the film should attain a specific range of value. In order to attain this specific range of microstructure in the vacuum deposition of the film it is necessary to control deposition rate and heating of the support or substrate to a range of temperature at which a sufficient rate of migration of the deposited atoms can take place. The heating of the support can be achieved directly by a heater or indirectly by bombardment of the depositing atoms. In the case of diode sputtering, heating is accomplished by bombardment of free electrons or ions. It is well known that the pure Co metal would tend to transform from a HCP phase at lower temperature to a face-center cubic (FCC) phase at higher temperature. In bulk Co metal, the transformation temperature of HCP to FCC is about 400°C. In vacuum deposition of the thin film the equivalent temperature at the surface where the atoms deposit on the support is generally higher, such as, several hundred degrees centigrade higher than the support temperature. Therefore, it is very difficult to obtain a strictly HCP phase in vacuum deposition of a pure Co thin film. The vacuum deposited pure Co metallic thin films generally have a mixture of FCC and HCP phases and the existance of FCC phase in the film causes the coercive field of the film to decrease below the limit at which the film can no longer be useful as a medium for high density recording, which limit may, for example, be below 8000 A.m$^{-1}$.

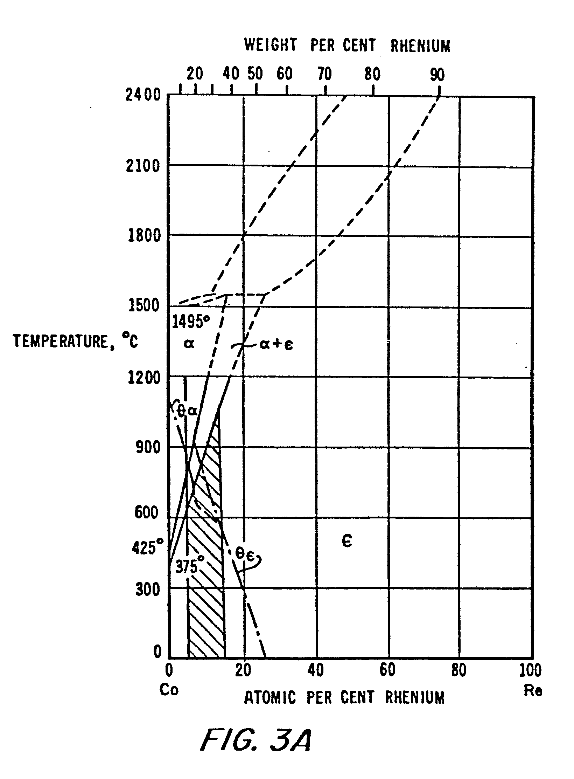

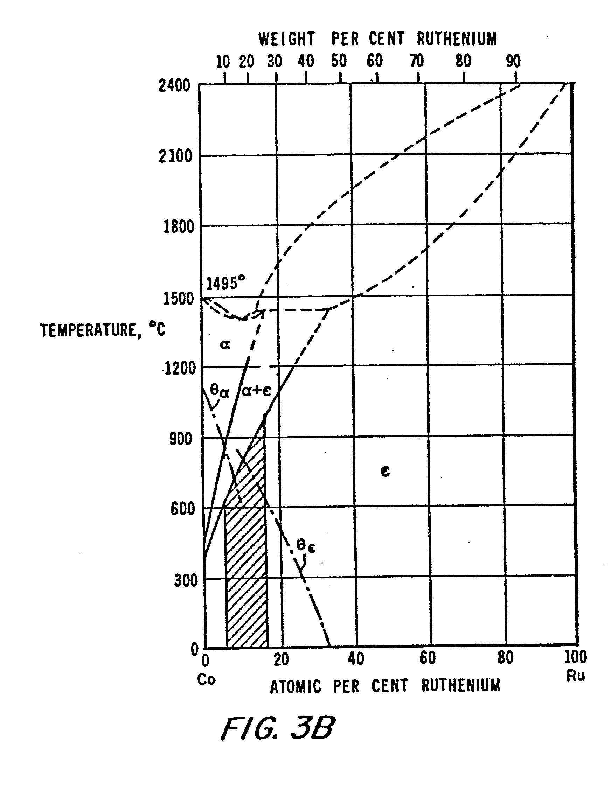

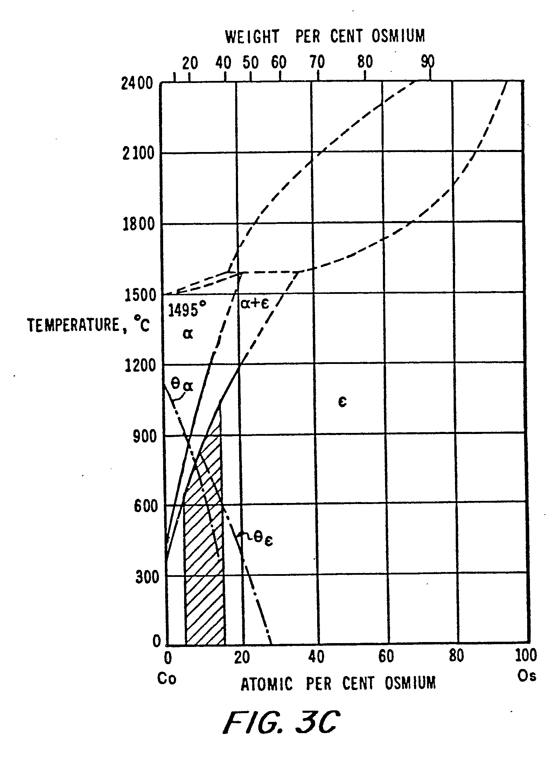

Disclosed here is the vacuum deposition of Co rich Co-Re, Co-Ru or Co-Os binary systems or Co rich admixtures consisting of Re, Ru and Os to obtain the high coercive field metallic film as recording medium for high density recording. As shown in Figure 3, the three elements Re, Ru, Os form a unique and quite identical phase diagram with Co. The three elements form complete solid solubility with Co. The alloying of Co with one or more of the three elements stabilizes the HCP structure which is $\varepsilon$ phase in these Figures. The minimum concentration of the alloying element in cobalt is governed by the stabilization of the HCP phase and maximum concentration of the alloying element is governed by the Curie temperatures of the $\varepsilon$ phase. Descriptions of some of the properties of Co-Re, Co-Ru and Co-Os binary systems are to be found in the following references:

(i) Geophysik und Technik, 6. Auflage, Band II, Teil 9, 1962, page 1—61 Landolt-Börnstein "Zahlenwerte aus Physik, Chemie, Astronomie".

(ii) Teble-Craik "Magnetic Materials" (Wiley, London, 1969) page 116, Figure 3.21a.

Consequentially, the useful range of concentration will be approximately 2 to 25 atomic % of the alloying element or their admixtures. The preferred range of alloying element is represented by the shaded areas in Figures 3A, 3B and 3C in the $\varepsilon$ phase. The preferred percentage is approximately 5 to 15 atomic percent of the elements, Re, Ru or Os or their admixtures. Consequently, alloying of Re, Ru or Os in a Co rich solid solution has increased the transformation temperature of HCP to FCC at about 400°C for pure Co to more than 1000°C for an alloy consisting of, for example, about 85 atomic % Co and 15 atomic % Re, Ru or Os. The increase in stability of the HCP and the increase in the transformation temperature of the HCP to the FCC transition makes it easier to deposit a pure HCP phase Co-alloy thin film at a much wider range of support temperature. Consequently, it is possible to produce films with higher H$_c$ and hysteresis squareness, that is, formation of a pure HCP phase film with desirable microstructure and crystalline orientation, through manipulation of support temperature over a wider range of temperatures.

In order to fabricate a magnetic recording medium according to this invention, a non-magnetic support of, eg, metal, plastic or glass, and an evaporation source or sputtering target containing a given composition of the Co rich magnetic alloy are placed in a vacuum chamber. The magnetic alloy is then evaporated onto the support via thermal evaporation using electron beam heating, or by sputtering using a diode or ion beam sputtering. Depending on the rate of deposition and the particular method of deposition and the range of coercive field and squareness desired for the final magnetic thin film, the support should be heated to a temperature in a range between ambient to 400°C, and preferably between ambient to 250°C. This temperature is maintained during the entire deposition process to facilitate the growth of the microcrystalline structure in the film.

In fabricating the thin film employing diode sputtering in either the RF of DC mode, an inert gas, such as Ar, Kr or Xe, should be maintained at a pressure between 0.40 and 13.33 N.m$^{-2}$ and the deposition rate should be maintained at a value between 0.01 and 0.05 nm.sec$^{-1}$, preferably between 0.04 and 0.3 nm.sec$^{-1}$. Variation of the deposition rate can be achieved by changing the applied power density, the support temperature, the gas pressure and by changing the target to the support distance. In the ion beam sputtering or electron beam evaporation, the vacuum pressure in the chamber is different, ranging from $1.33 \times 10^{-2}$ to $1.33 \times 10^{-6}$ N.m$^{-2}$ depending on the system and mode of operation. The deposition rate of the alloy films, however, should be maintained within the same range as in the case of diode sputtering specified above. The essence is to control the deposition rate and temperature of the support within the specified ranges to achieve the desired microstructure in a film which would give rise to an improved coercive field and squareness ratio fo the B-H hysteresis loop. The desired microstructure is characterised by a HCP structure having a proper grain size and proper separation between the grains. Employing the particular alloy system of this invention in the above sputtering method, control of grain separation and grain growth can be carefully regulated by controlling substrate temperature, deposition rate and inert gas pressure.

The resulting magnetic thin film so produced consists essentially of Co and the alloying elements or elements of Re, Ru or Os, having a coercive field of up to 64,000 A.m$^{-1}$ and squareness ratio S* of up to 98%. The coercive field and the squareness have a small thickness dependence in the thickness range of 20 to 200 nm. It will be apparent that the magnetic properties of the resulting magnetic thin film and the ease of production are greatly improved as compared with the other vapor deposition methods for fabricating the multilayer structure and the ion plating method for fabricating Co-Si structure, previously mentioned.

The thickness of the magnetic thin film according to this invention must be sufficient to provide sufficient signal output as a high density magnetic recording medium. Therefore, the thickness of the magnetic thin film is generally between 20 and 500 nm, preferably 20 to 200 nm.

As for the support, non-magnetic metals such as aluminium, copper, brass and stainless steel may be used and non-magnetic inorganic materials, such as glasses and ceramics, or non-magnetic plastic materials may be used.

The support may be shaped in the form of a tape, sheet, card, disk or drum and a fairly uniform thickness magnetic thin film can be produced when employing the vacuum deposition method.

Example 1

Magnetic recording media as described above, having good adhesion of the magnetic layer of the support and consisting of a magnetic thin film having excellent magnetic properties of high coercive field, high squareness ratio of B-H hysteresis loop and high saturation induction can be produced by conventional vacuum deposition techniques. The present invention will now be described by several detailed examples employing a RF sputtering technique, but this invention is not to be construed as limited thereto.

A glass plate of 0.5 mm thick was used as a support. The glass plate was placed on the substrate holder of a conventional sputtering system, and the temperature of the plate was monitored using a radiation heating element placed behind the opposite side of the surface of the support on which the alloy thin film was to be deposited. An alloy sputtering target consisting of either 92.5 atomic % Co and 7.5 at. % Re in one case and 90 at. % Co and 10 atomic % Re in another case was placed on the cathode of the RF sputtering system. After the sputtering apparatus was evacuated to $1.33 \times 10^{-4}$ N.m$^{-2}$ or lower pressure, argon gas of 0.40 to 13.33 N.m$^{-2}$ was introduced into the chamber. The sputtering process preceeded with the sputtering rate adjusted primarily by input power density to the sputtering system and, secondarily, by argon pressure and the distance between the target and the support. The distance between the support and the target was maintained at about 4 cm in this example. The support was preheated to a given temperature before actual sputtering and the temperature was maintained during the entire sputtering period. The deposited films consisted essentially of the Co-Re alloy as determined by a microprobe process. The thickness of the film was determined by a talystep and compared with an optical interferrometer. The magnetic properties of the resulting magnetic thin film were determined based on the hysteresis loop measured using a vibrating sample magnetometer and the results, including the target composition, support temperature, rate and thickness, are shown as in Table I. Four sputtered examples contained 7.5 atomic % Re and seven other sputtered examples contained 10 atomic % Re.

As shown in Table I, the magnetic thin film produced by sputtering of Co-Re on the surface of a glass support using the specified range of composition, support temperature and deposition rate had an excellent coercive field, squareness ratio and saturation induction which were suitable for use as high density magnetic recording media. Furthermore, the magnetic thin film so produced shows excellent isotropic magnetic properties in the plane of the film. It is apparent from the results shown in Table I, that the overall magnetic properties, such as coercive field and squareness ratio, obtained in these Co-Re examples are much improved over previously known magnetic thin film materials. For best results, it is preferred that (1) the deposition rate be maintained between 0.04 and 0.2 nm.sec$^{-1}$, (2) the support temperature be maintained between ambient to 250°C, (3) the target material consist of between 5 to 15 atomic % Re balanced with Co and (4) films deposited by the DC or RF sputtering method, the sputtering inert gas pressure should be maintained between 0.40 and 13.33 N.m$^{-2}$.

Example 2

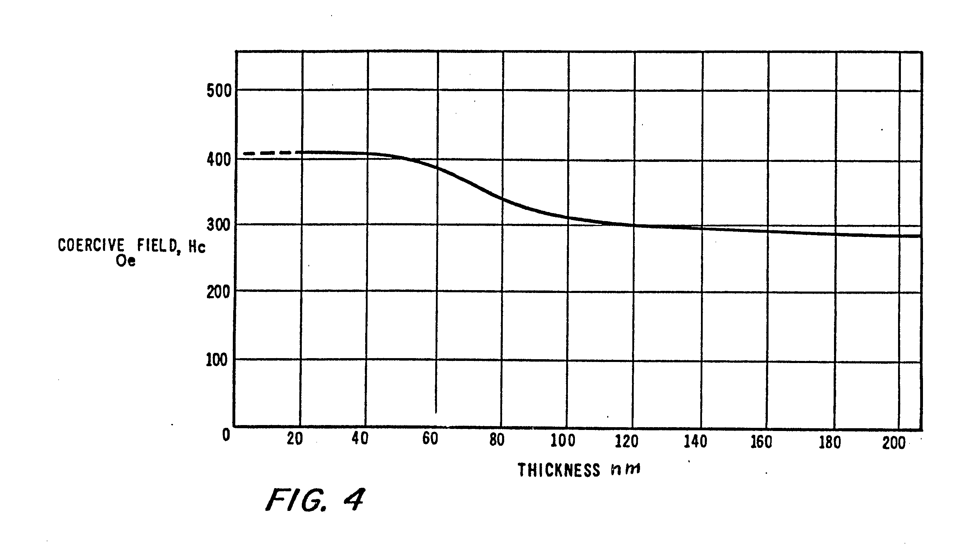

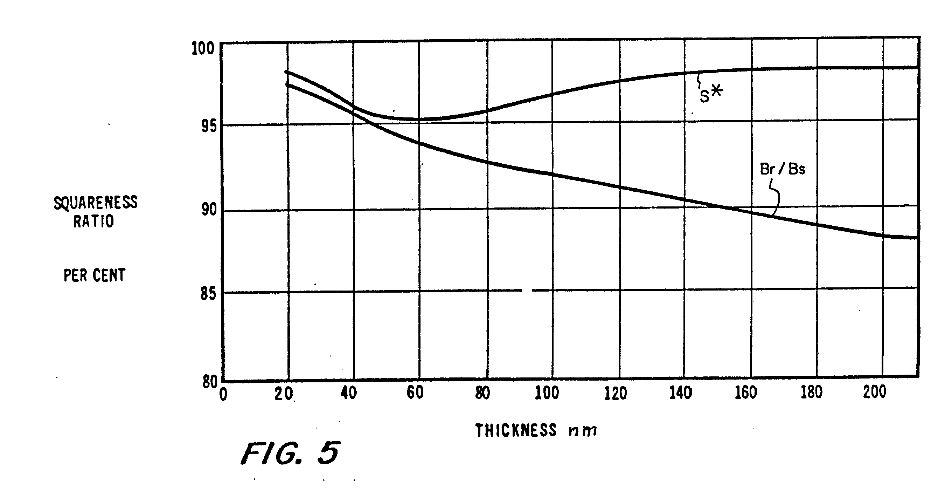

Using a deposition condition of a support temperature and a deposition rate selected from the range given in Example 1, a series of magnetic thin films with different thicknesses were produced by the same sputtering method to show the influence of thickness on the coercive field and squareness of the magnetic thin film. To produce this series, a 10 atomic % Re-90 atomic % Co target was used and the support temperature and the deposition rate were maintained at 200°C and 0.11 nm.sec$^{-1}$ respectively. The magnetic properties of the resulting magnetic thin films were measured and the results are shown in Figures 4 and 5, respectively, for the influence of the sputtered layer thickness on the coercive field and the squareness ratio. These results show that the influence of thickness on both the coercive field and the squareness ratio of the magnetic alloy thin film is very small in the thickness range of between 20 and 200 nm. The small variations of the magnetic properties on thickness in the thin film produced by this invention provides a sufficient level of uniformity for coercive field and squareness ratio in a large area thin film media without having to maintain a close control of the uniformity of the layer thickness.

Also in this example, a metal type support was employed. This support consisted of an aluminium substrate overcoated with nonmagnetic nickel alloy. The same sputtering conditions and alloying target mentioned above were employed. The results of the measured magnetic properties on the produced magnetic thin film with thickness of 50 nm showed a coercive field of 32,000 A.m$^{-1}$ and squareness ratio $B_r/B_s$ of 0.92 and S* of 0.94. These properties are similar to the magnetic thin film deposited on the glass support as shown in Figures 4 and 5 and Table I under deposition conditions. Thus, the same excellent magnetic thin film properties are produced on both metal and glass supports indicating no support surface dependence.

TABLE I

| at. % Re in the target | Temperature of the support °C | Deposition rate $nm.sec^{-1}$ | Thickness of the magnetic film nm. | Coercive field in $A.m^{-1}$ | Squareness ratio in Br/Bs | Squareness ratio in S* | Approximate saturation induction in $Wb.m^{-2}$ |
|---|---|---|---|---|---|---|---|
| 7.5 | 20 | 0.058 | 52.2 | 47,750 | 0.87 | 0.90 | 0.85 |
| 7.5 | 20 | 0.068 | 61.5 | 58,010 | 0.80 | 0.81 | 0.85 |
| 7.5 | 150 | 0.159 | 48.0 | 33,980 | 0.86 | 0.91 | 0.85 |
| 7.5 | 200 | 0.051 | 61.5 | 22,280 | 0.93 | 0.85 | 0.85 |
| 10 | 150 | 0.116 | 50.0 | 35,490 | 0.93 | 0.94 | 0.70 |
| 10 | 150 | 0.157 | 47.5 | 28,570 | 0.94 | 0.98 | 0.70 |
| 10 | 150 | 0.199 | 60.0 | 26,740 | 0.96 | 0.98 | 0.70 |
| 10 | 200 | 0.115 | 55.5 | 32,870 | 0.93 | 0.94 | 0.70 |
| 10 | 200 | 0.164 | 59.5 | 26,900 | 0.94 | 0.97 | 0.70 |
| 10 | 300 | 0.139 | 50.5 | 16,710 | 0.97 | 0.99 | 0.70 |
| 10 | 400 | 0.045 | 40.4 | 13,850 | 0.99 | 0.99 | 0.70 |

## Claims

1. A magnetic recording medium comprising a thin film of a magnetic alloy of cobalt on a non-magnetic support characterised in that the magnetic alloy comprises cobalt and any one or more of the elements rhenium, ruthenium and osmium, the alloy being in the hexagonal close-packed phase.

2. The recording medium of Claim 1 wherein said element or elements comprises from 2 to 25 atomic percent of the alloy.

3. The recording medium of Claim 1 wherein said element or elements comprises from 5 to 15 atomic percent of the alloy.

4. The recording medium of any one of Claims 1 to 3 wherein the film has a thickness of from 20 to 200 nm.

5. The recording medium of any one of Claims 1 to 4 wherein the magnetic material has a squareness ratio between 0.8 and 1.0 and a coercive field between 16,000 and 64,000 $A.m^{-1}$ relatively independent of film thickness.

6. A method of producing the magnetic recording medium of any one of Claims 1 to 5 characterised in that the magnetic alloy of cobalt is vacuum deposited on the support with the support maintained at a temperature between ambient temperature and 400°C.

7. The method according to Claim 6 wherein the rate of deposition of the magnetic material is maintained between 0.01 and 0.5 $nm.sec^{-1}$.

8. The method according to Claim 6 wherein the rate of deposition of the magnetic material is maintained between 0.04 and 0.3 $nm.sec^{-1}$.

9. The method according to any one of Claims 6 to 8 wherein vacuum depositing is accomplished by DC or RF diode sputtering, the sputtering gas pressure being maintained between 0.40 and 13.33 $N.m^{-2}$.

## Patentansprüche

1. Ein magnetisches Aufzeichungsmedium mit einem dünnen Film einer magnetischen Kobaltlegierung auf einem nicht-magnetischen Träger, dadurch gekennzeichnet, daß die magnetische Legierung Kobalt und eines oder mehrere der Elemente Rhenium, Ruthenium und Osmium enthält, wobei die Legierung in der hexagonalen, dicht gepackten Phase ist.

2. Das Aufzeichnungsmedium nach Anspruch 1, bei dem das Element oder die Elemente 2 bis 25 atomare Prozente der Legierung bilden.

3. Das Aufzeichnungsmedium nach Anspruch 1, bei dem das Element oder die Elemente 5 bis 15 atomare Prozente der Legierung bilden.

4. Das Aufzeichnungsmedium nach einem der Ansprüche 1 bis 3, bei dem der Film eine Dicke von 20 bis 200 nm hat.

5. Das Aufzeichnungsmedium nach einem der Ansprüche 1 bis 4, bei dem das magnetische Material ein Quadratverhältnis zwischen 0,8 und 1,0 hat und eine koerzitive Feldstärke zwischen 16.000 und 64.000 $Am^{-1}$ hat, die relativ unabhängig von der Filmdicke ist.

6. Ein Verfahren zum Herstellen des magnetischen Aufzeichnungsmediums nach einem der Ansprüche 1 bis 5, dadurch gekennzeichnet, daß die magnetische Kobaltlegierung auf dem Träger durch Vakuum-Ablagerung aufgebracht wird, wobei der Träger bei einer Temperatur zwischen der Umgebungstemperatur und 400°C gehalten wird.

7. Das Verfahren nach Anpruch 6, bei dem die Ablagerungs-geschwindigkeit des magnetischen Materials zwischen 0,01 und 0,5 $nm.sec^{-1}$ gehalten wird.

8. Das Verfahren nach Anspruch 6, bei dem die Ablagerungs-geschwindigkeit des magnetischen Materials zwischen 0,04 und 03 $nm.sec^{-1}$ gehalten wird.

9. Das Verfahren nach einem der Ansprüche 6 bis 8, bei dem die Vakuum-Ablagerung durch Gleichstrom- oder Hochfrequenz-Diodenzerstäubung ausgeführt wird, wobei der zerstäubungsgasdruck zwischen 0,40 und 13,33 $N.m^{-2}$ gehalten wird.

## Revendications

1. Milieu d'enregistrement magnétique constitué d'un film fin d'un alliage magnétique de cobalt sur un support non magnétique, caractérisé en ce que l'alliage magnétique comprend du cobalt et un ou plusieurs des éléments suivants: rhénium, ruthénium et osmium, l'alliage étant dans la phase hexagonale à tassement serré.

2. Milieu d'enregistrement selon la revendication 1, caractérisé en ce que l'élément ou les éléments comprenennt entre 2 et 25 atomes en % de l'alliage.

3. Milieu d'enregistrement selon la revendication 1, caractérisé en ce que l'élément ou les éléments comprenennt entre 5 et 15 atomes en % de l'alliage.

4. Milieu d'enregistrement selon l'une quelconque des revendications 1 à 3, caractérisé en ce que le film a une épaisseur comprise entre 20 et 200 nm.

5. Milieu d'enregistrement selon l'une quelconque des revendications 1 à 4, caractérisé en ce que le matériau magnétique a un rapport de forme carrée compris entre 0,8 et 1,0 et un champ coercitif entre 16 000 et 64 000 $A.m^{-1}$, qui sont relativement indépendants de l'épaisseur du film.

6. Procédé de fabrication du matériau d'enregistrement magnétique selon l'une quelconque des revendications 1 à 5, caractérisé en ce que l'alliage magnétique de cobalt est déposé sous vide sur le support, avec le support maintenu à une température comprise entre la température ambiante et 400°C.

7. Procédé selon la revendication 6, caractérisé en ce que la vitesse de dépôt du matériau magnétique est maintenue entre 0,01 et 0,5 mm.sec$^{-1}$.

8. Procédé selon la revendication 6, caractérisé en ce que la vitesse de dépôt du matériau magnétique est maintenue entre 0,04 et 0,3 mm.sec$^{-1}$.

9. Procédé selon l'une quelconque des revendications 6 à 8, caractérisé en ce que le dépôt sous vide est exécuté par pulvérisation par diode HF ou en courant continu, la pression du gaz de pulvérisation étant maintenue entre 0,40 et 13,33 N.m$^{-2}$.

FIG. 1

FIG. 2

FIG. 3A

FIG. 3B

FIG. 3C

FIG. 4

FIG. 5

0 007 755